# EUROPÄISCHE PATENTSCHRIFT

(11) **EP 0 599 336 B1**
(45) Veröffentlichungstag und Bekanntmachung des Hinweises auf die Patenterteilung: **30.09.1998**
(21) Anmeldenummer: 93119097.9
(22) Anmeldetag: 26.11.1993
(51) Int. Cl.: F02M 35/024, B01D 39/16

(54) **Filteranordnung**
Filter arrangement
Arrangement de filtre

(30) Priorität: 26.11.1992 DE 9216049 U
(43) Veröffentlichungstag der Anmeldung: 01.06.1994
(73) Patentinhaber: FILTERWERK MANN & HUMMEL GMBH, 71631 Ludwigsburg (DE)
(72) Erfinder: Müller, Heinz, D-71686 Remseck (DE)
(74) Vertreter: Voth, Gerhard, Dipl.-Ing.

(56) Entgegenhaltungen:
- EP-A- 0 082 106
- EP-A- 0 466 381
- DE-U- 7 225 224
- GB-A- 2 197 802

## Beschreibung

Die Erfindung betrifft eine Filter anordnung, insbesondere ein Rechteckluftfilter, Derartige Filter sind bekannt, z.B. als Luftfilter für Verbrennungskraftmaschinen aus der GB 21 97 802.

Für den sicheren Betrieb derartiger Verbrennungskraftmaschinen ist es von Bedeutung, daß die verwendeten Luftfilter einen bestimmten Luftdurchsatz garantieren. Will man nun bei bestehenden Luftfiltern die Standzeit bzw. die Wartungsintervalle vergrößern, so könnte man nun die Filterfläche vergrößern. Dies wäre zum einen kostenaufwendig, zum anderen würde sich das Filter wesentlich vergrößern, was aus konstruktionsbedingten Gründen von Nachteil wäre.

Die in der GB 21 94 802 beschriebene Schaumstoffschicht ist zum einen teurer als Vlies, die Herstellung eines solchen Filters ist sehr aufwendig, zum anderen erhöht sich mit zunehmender Beladung der Druckverlust, was nachteilig ist. Von Nachteil ist auch, daß die in der Gebrauchsmusterschrift 72 258 224 beschriebene Wirrfaservliesschicht nicht auswechselbar ist, die Vliesschicht ist in ein Kunststoffrahmenteil mit den entsprechenden Rändern des Filterlements eingebettet, was auch teuer und kompliziert in der Herstellung ist.

Aus der EP 0082106 ist für ein Filter einen U-Profilrahmen als Aufnahmeteil vorgesehen. Dieses Aufnahmeteil wird verwendet für eine mittig abgestützte Faserfiltermatte. Zusätzlich zu dem Aufnahmeteil bzw. Aufnahmerahmen ist in Verbindung mit einem notwendigen Flanschrand eine zusätzliche Rahmendichtung vorgesehen. Ein Nachteil dieses Aufbaus besteht darin, daß das aufwendige Herstellungsverfahren unwirtschaftlich ist und die Materialkombination die Entsorgung erschwert.

Aus dem DE GM 72 25 224 ist ein plattenförmiger Filtereinsatz für die Ansaugluft von Brennkraftmaschinen bekannt. Bei diesem sind die Ränder eines aus einer Filterstoffbahn in zick-zack-Faltung quaderartig gestalteten Filterelemts in rechteckige Rahmen aus Kunststoff eingebettet, wobei das Filterelement aus einem gegen flammrückstoßunempfindlichen Filterpapier gefertigt ist und wobei auf seiner Lufteintrittsfläche eine Matte aus synthetischem Wirr-Faservlies als vorfilterhaftend aufgebracht ist. Auch hier ist der Aufbau nicht geeignet, eine einfache Entsorgung des Elements zu gewährleisten.

Es ist somit Aufgabe der Erfindung, ein Filter der eingangs genannten Art dahingehend zu verbessern, daß ein einfaches und standzeitverlängertes Filter geschaffen wird, welches problemlos entsorgt werden kann.

Erfindungsgemäß wird diese Aufgabe durch die Merkmale des unabhängigen Anspruchs 1 gelöst.

Durch das diffus wirkende Flächengebilde, das als Vorabscheider in Aktion tritt, wird infolge der Vorschaltung eine Standzeiterhöhung des genannten Filters um ca. 50% erreicht.

Eine vorteilhafte Weiterentwicklung der Erfindung sieht vor, daß die Faserstoffschicht aus Elementarfäden besteht, somit ist eine Faserstoffschichtbildung direkt unterhalb der Spinndüse möglich.

Eine vorteilhaft Weiterbildung sieht vor, daß die Vorabscheideeigenschaften durch das Vermögen der statischen Aufladbarkeit stark verbessert werden.

Vorteilhafterweise erreicht man durch diese differenzierte Aufteilung der Filterbereiche in verschieden große Porenbereiche, daß die Filterfläche nicht sofort belegt ist und der Luftdurchlaß erhalten bleibt, da die Grob- bzw. Vorfilterschicht auf der Anströmseite die Aufgabe hat, zu verhindern, daß alle Partikel bis zur Feinfilterschicht gelangen.

Polymere wie Polypropylen, Polyethylen, Polyamid oder Polyester werden von Extrudern aufgeschmolzen und anschließend durch eine Vielzahl kleiner, in einer Linie angeordneter Öffnungen gepreßt. Die Polymerschmelze wird unmittelbar unterhalb der "Spinndüse" von zwei Heißluftströmen erfaßt, die sich annähernd mit Schallgeschwindigkeit bewegen und die austretenden Filamente auf einen Durchmesser von 0,5 - 3,0 µm verstrecken. Bedingt durch die Kraft des Heißluftstroms und die Feinheit der Filamente, zerreißen diese sehr häufig, so daß mehr oder weniger lange, sehr feine Filamentabschnitte unmittelbar zu einer Faserstoffschicht, insbesondere auf einem Rechteckluftfilter, abgelegt werden. Dieses Filterpapier des Rechteckluftfilters liegt in einem Stärkebereich von etwa 0,4 - 2 mm, dessen Zusammensetzung beginnt bei einem Mischungsverhältnis von Kunstfaser/Cellulose von 50/50 bis hin zu 100% Cellulose. Verschiedene Korngrößen werden in verschiedenen Filterebenen abgefangen. So bleibt der Druckverlust gering, die Standzeit erhöht sich. Ein Vergleich macht deutlich, daß ein Vorvlies die Standzeit um ca. 90% erhöhen kann, bei gleichen Gehäuseabmessungen. Um über eine Filterpapiererweiterung, bei gleicher Bauhöhe, eine Erhöhung der Standzeit zu erzielen, läge diese lediglich bei 30%.

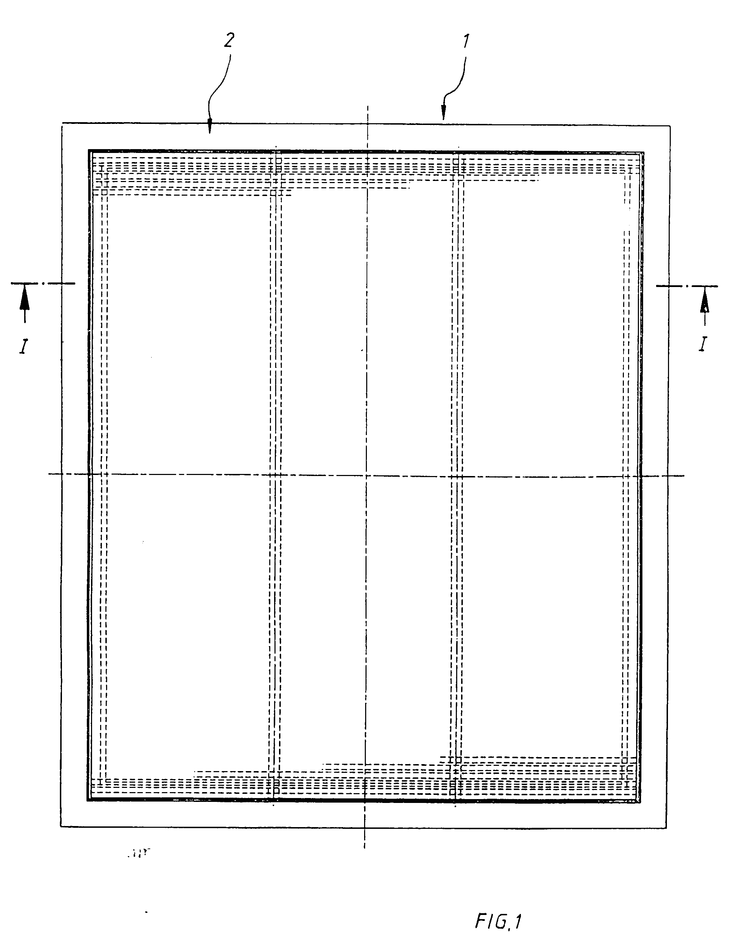

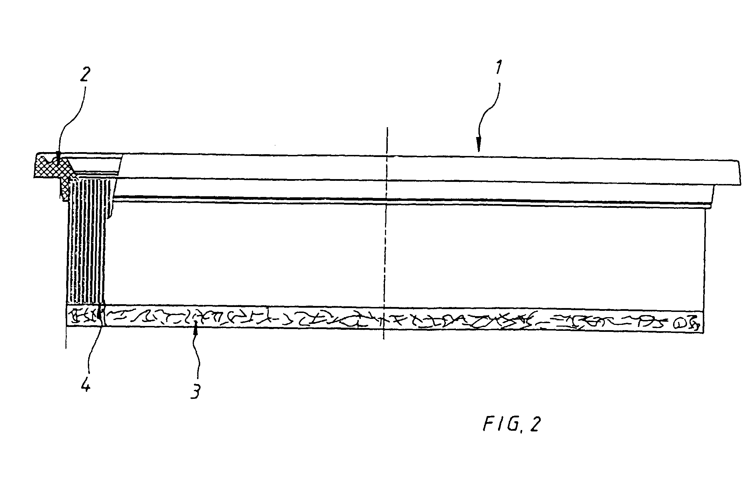

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Figur 1: Draufsicht eines Rechteckluftfilters
- Figur 2: Schnitt durch einen Rechteckluftfilter entlang der Linie I-I
Das Filter besteht aus einem Rechteckluftfiltereinsatz (1), der wie in den Figuren 1 und 2 zu sehen ist, aus gefaltetem Filterpapier (4) aufgebaut ist. Das gefaltete Filterpapier (4) wird von einem PUR-Dichtring gesäumt. Wie in Figur 2 zu sehen ist, ist auf der Rohluftseite ein textiles Flächengebilde (Vlies 3) angebracht, mit dessen Hilfe die Standzeit des gesamten Filters um 50% erhöht wird. Diese Standzeiterhöhung kommt u.a. dadurch zustande, weil das textile Flächengebilde (3) als Vorabscheider tätig wird und so eine vorzeitige Beladung des Filterpapiers (4) vermeiden hilft.

In der gezeigten Form hält das textile Flächengebilde (Vlies 3) die Feinstaubanteile zurück und zwar an der Faseroberfläche. Durch die unterschiedlichen Verhältnisse der Strömungsgeschwindigkeit, hohe Geschwindigkeit im Vlies (3), geringere im Papier (4), durchdringen die gröberen Bestandteile des Staubs das Vlies (3).

Das wasserbeständige Vlies (3) dient auch als Schutz des Filterpapiers (4). Bei mangelndem Zyklon kann solch ein Filtereinsatz (1) in staubreichen Ländern den Motor vor starker Belastung bewahren.

### Bezugszeichenliste

- 1: Rechteckluftfilter
- 2: PUR-Dichtring
- 3: Textiles Flächengebilde (Vlies)
- 4: Filterpapier

## Patentansprüche

1. Filter anordnung, insbesondere Rechteckluftfilter, wobei an einem ersten Filter welches aus gefaltetem Filterpapier (4), das reinluftseitig von einer Dichtung (2) gesäumt wird, besteht, rohluftseitig ein aus Faserstoffschichten bestehendes Vlies angebracht ist, wobei das angebrachte Vlies nachträglich montierbar ist, wobei die Vliesschicht (3) durch, auf dem Trägerfilterpapier polymerisierende hochmolekulare Monomere aufgebracht ist.

2. Filter nach Anspruch 1, dadurch gekennzeichnet, daß die Faserstoffschichten aus Elementarfäden bestehen.

3. Filter nach Anspruch 1, dadurch gekennzeichnet, daß die Faserstoffschichten aus Kunstfasern bestehen.

4. Filter nach einem oder mehreren der vorgenannten Ansprüche, dadurch gekennzeichnet, daß die Faserstoffschichten aus statisch aufladbarem Material sind.

## Claims

1. Filter arrangement, more especially a rectangular air filter, wherein a web, comprising fibrous material layers, is attached at the unfiltered end to a first filter, which comprises folded filter paper (4) edged by a seal (2) at the filtered air end, wherein the attached web is subsequently mountable, and wherein the web layer (3) is applied by high-molecular monomers which polymerise on the carrier filter paper.

2. Filter according to claim 1, characterised in that the fibrous material layers comprise elementary filaments.

3. Filter according to claim 1, characterised in that the fibrous material layers comprise synthetic fibres.

4. Filter according to one or more of the aforementioned claims, characterised in that the fibrous material layers are formed from statically chargeable material.

## Revendications

1. Filtre, en particulier filtre rectangulaire, un non tissé est placé côté air brut sur un premier filtre constitué par un filtre en papier (4) plié, bordé, côté air épuré, par un joint d'étanchéité (2) et le non tissé mis en place est susceptible d'être monté ultérieurement, la couche de non tissé (3) étant maintenue par des monomères polymérisants à haute masse moléculaire disposés sur le papier du filtre porteur.

2. Filtre selon la revendication 1,
caractérisé en ce que
les couches de fibres sont composées de fibres élémentaires.

3. Filtre selon la revendication 1,
caractérisé en ce que
les couches de fibres sont composées de fibres synthétiques.

4. Filtre selon une ou plusieurs des revendications précédentes,
caractérisé en ce que
les couches de fibres sont faites d'un matériau se chargeant d'électricité statique.
